# EUROPÄISCHE PATENTSCHRIFT

(11) **EP 1 034 866 B1**
(45) Veröffentlichungstag und Bekanntmachung des Hinweises auf die Patenterteilung: **11.09.2002**
(21) Anmeldenummer: 00104915.4
(22) Anmeldetag: 08.03.2000
(51) Int. Cl.: B23C 5/10, B23P 15/34, B27G 15/00, B22F 7/06, B23B 51/00, B27G 13/12

(54) **Schaftfräserrohling aus Hartwerkstoff**
End mill blank made of hard material
Ebauche pour fraise à queue en materiau dur

(30) Priorität: 10.03.1999 DE 19910580
(43) Veröffentlichungstag der Anmeldung: 13.09.2000
(73) Patentinhaber: TIGRA Hartstoff GmbH, 86698 Oberndorf a. Lech (DE)
(72) Erfinder: Motzer, Helge, 86609 Donauwörth (DE)
(74) Vertreter: Gallo, Wolfgang, Dipl.-Ing. (FH)

(56) Entgegenhaltungen:
- EP-A- 0 532 802
- EP-A- 0 578 626
- US-A- 3 775 819
- US-A- 4 813 823
- DZHELOMANOVA L M: "INJECTION MOULDING - NEW UNIQUE PROCESS IN POWDER METALLURGY" STEEL IN TRANSLATION,GB,THE INSTITUTE OF MATERIALS, LONDON, Bd. 22, Nr. 8, 1. August 1992 (1992-08-01), Seiten 384-385, XP000365122 ISSN: 0967-0912

## Beschreibung

Die Erfindung bezieht sich auf einem Schaftfräser rohling aus Hartwerkstoff. Schaftfräser für die Holzbearbeitung (siehe z.B. EP 0 532 902) werden beispielsweise dafür eingesetzt, Nuten, Schlitze und dgl. in Massivholz oder auch in kunstharzgebundenen Preßspanplatten im Möbel-, Fenster- und Türenbau einzufräsen. Diese Schaftfräser weisen häufig eine Bohrspitze auf, damit der Fräser am einen Ende einer einzufräsenden Nut oder Schlitzöffnung bohrend, also in Axialrichtung, in das zu bearbeitende Holz eingefahren werden kann, um dann die Nut oder den Schlitz zu fräsen, indem eine relative Vorschubbewegung zwischen dem Holz und dem Fräser quer zur Fräserachse erzeugt wird und der Fräser mit seinem am Umfang angeordneten Schneiden arbeitet.

Da Holz und ganz besonders Preßspanplatten bekanntermaßen die Fräserschneiden in hohem Maße auf Verschleiß beanspruchen, verwendet man für diese Materialien üblicherweise Fräser aus Hartmetallwerkstoffen, um eine brauchbare Standzeit zu erreichen. Da bei solchen Schaftfräsern die Schneiden schraubenlinienförmig am Umfang verlaufen müssen und die axiale Länge der Fräserschneiden ein Mehrfaches des Fräserdurchmessers beträgt, muß der Schaftfräser insgesamt aus Hartmetall hergestellt sein, im Gegensatz zu einfachen Bohrern oder manchen Scheibenfräsern, wo die Schneiden aus aufgeschweißten Hartmetallplättchen und der restliche Werkzeugkörper aus üblichem Werkzeugstahl bestehen. Bei den hier in Rede stehenden Schaftfräsern bedeutet dies umfangreiche Schleifarbeiten, insbesondere durch das Einarbeiten der Spanräume, die aus dem vollen Material herausgeschliffen werden müssen.

Der Erfindung liegt die Aufgabe zugrunde, eine Möglichkeit zu einfacheren, schnelleren und wesentlich kostengünstigeren Fertigung darartiger Schaftfräser aus Hartwerkstoffen zur Holzbearbeitung zu schaffen.

Diese Aufgabe wird erfindungsgemäß durch die im Patentanspruch 1 angegebene und in den Unteransprüchen vorteilhaft weiter ausgestaltete Ausbildung eines Schaftfräserrohlings gelöst.

Der erfindungsgemäße Schaftfräserrohling ist aufgrund seiner Ausbildung als spritzgegossenes Formteil mit eingeformten Freiräumen angrenzend an Rücken- und Spanbereich der Schneiden so beschaffen, daß die notwendige Schleifarbeit sich unmittelbar auf die Schneiden beschränkt und daher nur noch einen geringen Bruchteil der bei herkömmlichen Schaftfräsern dieser Gattung notwendigen Schleifarbeiten umfaßt. Dadurch wird ein ganz erheblicher Kostenvorteil erzielt.

Die angewandte Technik des Spritzgießens des den Fräserrohling bildenden Formkörpers ermöglicht auch noch weitere Modifikationen der Schaftfräserausbildung gegenüber der herkömmlichen Ausbildung, nämlich mit einem zu Material- und Gewichtsersparnis führendem Hohlschaft.

Als Materialien für den erfindungsgemäßen Schaftfräserrohling bzw. den daraus durch Fertigschleifen herzustellenden Schaftfräser kommen nicht nur Hartmetallwerkstoffe, sondern auch Keramikwerkstoffe in Betracht, was mit dem vorstehend schon verwendeten Oberbegriff "Hartwerkstoffe" umschrieben werden soll.

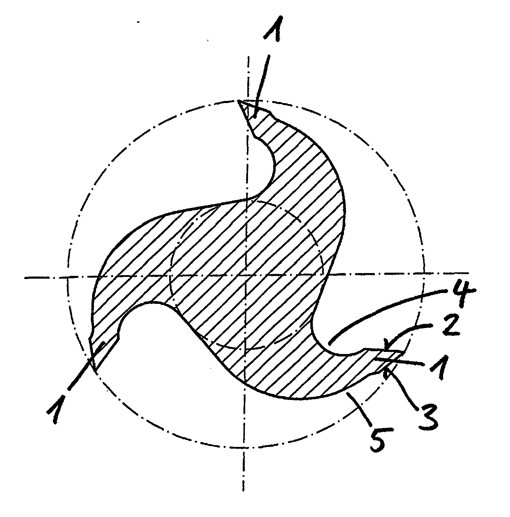

Ein Ausführungsbeispiel der Erfindung wird nachstehend unter Bezugnahme auf die anliegende Zeichnung in näheren Einzelheiten beschrieben. Die Zeichnung zeigt einen Querschnitt durch den Arbeitsbereich, also den die Fräserschneiden umfassenden Teil des Schaftfräserrohling.

Der in der Zeichnung dargestellte Schaftfräserrohling bzw. Schaftfräser ist mit drei am Umfang verteilten Schneiden 1 ausgebildet, die jeweils eine Spanfläche 2 und eine Rückenfläche 3 haben.

Während, wie schon oben erwähnt, herkömmliche Schaftfräser aus Hartmetall einen zylindrischen Rohling haben, aus welchem die Schneiden durch Einschleifen der Spanräume und der Freiräume im Rückenbereich herausgearbeitet werden, ist der vorliegende Schaftfräserrohling gegenüber der üblichen Zylinderform dadurch modifiziert, daß hohlkehlförmige Spanräume 4 vorgebildet sind und diese hohlkehlenförmig gegenüber der jeweiligen Spanfläche 2 der schon am Rohling ausgebildeten Schneiden zurückgesetzt sind, und daß in Umfangsrichtung hinterhalb der Rückenfläche 3 jeder Schneide 1 ein Freiraum 5 durch radiales Zurücksetzen der Umfangsfläche mit Bezug auf die Rückenfläche 3 radial einwärts eingeformt ist.

Der so gestaltete Werkzeugrohling wird durch Spritzgießen des "grünen" pulvermetallurgischen oder keramischen Ausgangsmaterials geformt und durch anschließende Sinterung oder dgl. zum fertigen Hartwerkstoff-Rohling weiter verarbeitet.

Nunmehr brauchen nur noch die Schneiden geschliffen zu werden, um den fertigen Schaftfräser zu erhalten. Dazu brauchen nur die Spanfläche 2 und die Rückenfläche 3 geschliffen zu werden, um die Schneiden fertigzustellen. Wegen des durch den schon im Rohling gebildeten Spanraums 4, der durch seine hohlkehlenförmige Ausbildung und Zurücksetzung gegenüber der Spanfläche 2 der Schneide 1 dieser gegenüber auch einen Freiraum bildet, und wegen des sich an die Rückenfläche 3 anschließenden Freiraums haben die zu schleifenden Flächen der Schneide nur eine geringe Ausdehnung, so daß nur geringfügig Material getragen werden muß und dadurch ein schnelles Schleifen mit entsprechend geringem Verschleiß an den Schleifwerkzeugen erfolgen kann.

Abgesehen davon führt die Ausbildung des erfindungsgemäßen Rohlings auch zu einer Materialersparnis. Dazu kann (in der Zeichnung nicht dargestellt) auch der Werkzeugschaft hohl ausgebildet sein.

## Patentansprüche

1. Schaftfräserrohling aus Hartwerkstoff, mit einem Schaft zum Einspannen, einem Fräserbereich mit einer Anzahl am Umfang angeordneter Fräserschneiden, und ggf. eine Bohrspitze, wobei der aus "grünem" Material spritzgußgeformte und anschließend gesinterte Rohling mit vorgeformten Schneiden (1), eingeformten Spanräumen (2) vorderhalb der Schneiden (1), die jeweils hohlkehlenartig mit Bezug auf die Spanflächen (2) der Schneiden (1) zurückgesetzte Freiräume bilden, und mit hinterhalb der Rückenflächen (3) der Schneiden (1) eingeformten, gegenüber der Rückenflächen (3) radial einwärts zurückgesetzten Freiräumen ausgebildet sind.

2. Schaftfräserrohling nach Anspruch 1, **dadurch gekennzeichnet, daß** dieser an seinem Stirnende mit einer Bohrspitze versehen ist.

3. Schaftfräserrohling nach Anspruch 1 oder 2, **dadurch gekennzeichnet, daß** der Schaft als Hohlschaft ausgebildet ist.

## Claims

1. End milling cutter blank of hard material with a shaft for clamping, a cutting area with a number of cutting edges arranged on the periphery and where applicable a drilling tip, where from the blank which is injection-moulded from "green" material and subsequently sintered with preformed cutting edges (1), in front of the cutting edges (1) are formed moulded chipping zones (2) which each form a groove-like clear zone set back in relation to the chipping surface (2) of the cutting edge (1), and behind the back surfaces (3) of the cutting edges (1) are formed moulded clear zones set back radially inwards in relation to the back surfaces (3).

2. End milling cutter blank according to claim 1, **characterised in that** this has a drilling tip at its leading end.

3. End milling cutter blank according to claim 1 or 2, **characterised in that** the shaft is formed as a hollow shaft.

## Revendications

1. Ebauche de fraise à queue en matériau à résistance mécanique élevée, comportant une queue pour le serrage, une partie fraise avec un nombre donné de taillants disposés à sa périphérie, et le cas échéant une pointe de centrage, l'ébauche en « matériau vert » moulé par un procédé de moulage-injection, puis fritté, présentant des taillants (1) préformés, des logements de copeaux (4) en avant des taillants (1), qui définissent des espaces en forme de gorge en retrait par rapport aux faces de coupe (2) des taillants (1), et, derrière les faces arrière (3) des taillants (1), des espaces qui sont en retrait radialement en direction de l'intérieur par rapport auxdites faces arrière (3).

2. Ebauche de fraise à queue selon la revendication 1, **caractérisée en ce qu'**elle est pourvue sur sa face frontale d'une pointe de centrage.

3. Ebauche de fraise à queue selon la revendication 1 ou 2, **caractérisée en ce que** la queue est creuse.
